# FASCICULE DE BREVET EUROPEEN

(11) **EP 2 257 584 B1**
(45) Date de publication et mention de la délivrance du brevet: **22.03.2017**
(21) Numéro de dépôt: 09722991.8
(22) Date de dépôt: 25.02.2009
(51) Int. Cl.: C08G 63/48, C08K 5/06, C09D 167/08

(54) **PROCÉDÉ DE MISE EN DISPERSION DANS L'EAU DE RÉSINES ALKYDES AVEC DES POLYMÈRES ASSOCIATIFS, FORMULATIONS OBTENUES ET PEINTURES AQUEUSES LES CONTENANT**
VERFAHREN ZUR DISPERSION VON ALKYDHARZEN MIT ASSOZIATIVEN POLYMEREN IN WASSER, AUF DIESE WEISE GEWONNENE FORMULIERUNGEN UND WÄSSRIGE LACKE DAMIT
METHOD FOR DISPERSING ALKYD RESINS WITH ASSOCIATIVE POLYMERS IN WATER, FORMULATIONS THUS OBTAINED AND AQUEOUS PAINTS CONTAINING SAME

(30) Priorité: 18.03.2008 FR 0801450
(43) Date de publication de la demande: 08.12.2010
(73) Titulaire: COATEX, 69730 Genay (FR)
(72) Inventeur: SUAU, Jean-Marc, F-69480 Lucenay (FR); RUHLMANN, Denis, F-69730 Genay (FR); GUERRET, Olivier, F-69890 La Tour de Salvagny (FR)
(74) Mandataire: Balmefrezol, Ludovic Francis Pierre
(86) Numéro de dépôt international: PCT/IB2009/000408
(87) Numéro de publication internationale: WO 2009/115880

(56) Documents cités:
- WO-A-2008/080906
- FR-A- 2 872 815
- US-A1- 2006 030 662

## Description

L'invention concerne le secteur des résines alkydes, mises en oeuvre pour fabriquer les peintures du même nom.

L'expression «peintures alkydes » renvoie soit à des polyesters résultant de la réaction d'acides organiques avec des polyols, soit à des alkydes dits alkydes-uréthannes résultant de la condensation de polyols avec des fonctions isocyanates. Dans la présente Demande, on parlera aussi bien de « résine » que de « polymère » alkyde. Historiquement, les peintures alkydes ont été fabriquées dès les années 50 en présence de solvants organiques, par opposition aux peintures en base aqueuse qui se sont développées plus tard.

On a cependant envisagé très tôt la possibilité de réaliser des peintures alkydes en phase aqueuse, anticipant ainsi la demande des consommateurs pour des produits exempts de solvants organiques. Cette problématique apparaît dans la littérature dès les années 80, tel qu'illustré par le document US 4 497 933 qui décrit un procédé de fabrication d'une peinture à base aqueuse, totalement exempte de solvants, et qui met en oeuvre une résine alkyde très particulière avec une teneur en fonction acide comprise entre 15 et 40 mg KOH / g de résine, ainsi qu'un nombre élevé de groupements OH. On comprend cependant qu'un tel procédé est très limitatif, en ce sens qu'il ne peut être appliqué par définition à tout type de résine alkyde.

Le document US 2006 030662 décrit notamment la copolymérisation dans l'eau des monomères acide méthacrylique, acétate de vinyle, acrylate de butyle, méthacrylate d'éthyle, méthacrylate de tristryrilphénylpoly(éthyleneoxy), diacrylate d'éthylène glycol. Ainsi, ces monomères sont copolymérisés pour former un polymère tensio-actif sous la forme d'un latex ou d'une émulsion. Aucune action sur le pH n'est envisagée.

Le document WO 2008 080806 décrit une composition polymérique pour la fabrication de dispersions aqueuses dans le domaine des compositions de revêtement, des encres d'impression, des adhésifs, des matériaux d'étanchéité ou de calfatage. Le polymère est obtenu à partir d'un macromonomère hydrophile, d'un polymère hydrophobe et d'un monomère pontant.

L'homme du métier a alors mis au point des techniques reposant sur la mise en oeuvre de tensio-actifs et/ou de solvants organiques (ces derniers étant ici utilisés en quantité moins importante que pour la formulation des peintures en phase solvant) : leur fonction est de solubiliser ladite résine alkyde en présence d'eau, autorisant ainsi la fabrication d'une peinture alkyde en phase aqueuse. Or, la présence de solvants et de tensio-actifs dans la peinture peut altérer l'efficacité des modificateurs de rhéologie communément mis en oeuvre dans les peintures aqueuses « classiques » ; ces épaississants demeurent tout aussi indispensables dans les peintures alkydes en base aqueuse, en vue de conférer à ces dernières le profil rhéologique souhaité.

De plus, la législation internationale -et plus particulièrement européenne- en matière de solvants et de rejet de composés organiques volatiles (COV) est de plus en plus restrictive, comme le souligne le récent document « advantages of water based solvent-free alkyd emulsions for deco paints » (Sbornik Prispevku - Mezinarodni Konference - Naterovich Homtach - 37th - Rp. Tch., 22-24 mai 2006, 92-104). A cet égard, les peintures à base de solvants organiques ne sauraient plus convenir à l'homme du métier, sur le plan de la réglementation environnementale. Enfin la présence de solvants ne permet pas de travailler dans de bonnes conditions de sécurité pour l'utilisateur (risque d'inflammation, d'intoxication voire risques allergiques).

Il est donc nécessaire de développer de nouvelles méthodes de préparation de peintures alkydes en milieu aqueux, exemptes de solvants et de tensio-actifs, dont le caractère général leur permettrait de s'appliquer à une résine alkyde quelconque, et qui s'accommoderait de la mise en oeuvre de modificateurs de rhéologie utilisés classiquement dans les peintures aqueuses. La Demanderesse s'est inscrite dans cet effort de recherche, parvenant à mettre au point un procédé de fabrication d'une telle peinture, qui repose sur une méthode originale de solubilisation de la résine alkyde visée.

En effet, on réalise initialement la mise en dispersion dans l'eau de ladite résine alkyde au moyen de polymères acryliques particuliers disposant de groupements hydrophobes terminaux, présentant un caractère dit « associatif ». Lorsque ces polymères sont neutralisés à pH suffisamment élevé (supérieur à 6), il y a création d'interactions associatives entre les groupements hydrophobes : ces interactions délimitent des domaines qui sont autant de cages de solvatation pour les molécules de résine alkyde. Ces cages de solvatation permettent de disperser dans l'eau les molécules du polymère alkyde, par un mécanisme « d'encapsulation ». De tels polymères sont souvent décrits dans la littérature à travers l'acronyme anglais HASE pour « émulsion alcali soluble modifiée hydrophobiquement ». Chimiquement, ils peuvent être définis à partir des monomères qui les constituent : le premier est à base d'acide (méth)acrylique, le deuxième est un ester de cet acide, et le troisième est un monomère hydrophobe associatif.

Un des mérites de la Demanderesse est d'avoir su identifier et utiliser le phénomène de structuration de l'eau via de tels polymères : on permet ainsi la mise en dispersion de la résine alkyde par encapsulation. Une telle mise en oeuvre de ces polymères est dans l'état de nos connaissances actuelles une utilisation nouvelle de ces objets largement décrits dans des applications pour la peinture (voir les documents FR 2 693 203, FR 2 872 815, FR 2 633 930), ou encore le secteur des bétons (voir la demande de brevet française portant le numéro de dépôt FR 07 00086 et non encore publiée à la date de dépôt de la présente demande).

En outre, cette technique est originale en soi, dans la mesure où elle se distingue des techniques « classiques » d'encapsulation basées soit sur des molécules « hôtes » comme les cyclodextrines (voir le document JP 2001 354515 sur l'encapsulation d'une huile micronisée), soit sur la polymérisation interfaciale (voir le document US 3 754 062 sur la polymérisation d'un mélange uréthanne-épichlorhydrine-amine en présence d'un corps gras), ou soit sur la mise en oeuvre de polymères carboxylés à base d'un monomère d'acide (méth)acrylique et d'un monomère d'ester acrylique (dans ce cas, le phénomène d'encapsulation est uniquement gouverné par la solubilité du polymère en fonction du pH ; de tels polymères sont commercialement disponibles sous les appellations Eudragit™, Kollicoat™ ou Eastacryl 30D™).

Aussi, un premier objet de l'invention est un procédé de mise en dispersion dans l'eau d'au moins une résine alkyde, caractérisé en ce qu'il comprend les étapes de :
a) mélanger au moins un polymère associatif constitué :
   - d'au moins un monomère qui est l'acide (méth)acrylique,
   - d'au moins un monomère qui est un ester (méth)acrylique,
   - et d'au moins un monomère hydrophobe associatif,
   avec au moins une résine alkyde et de l'eau,
   le mélange étant constitué d'au moins 20 % en poids d'une résine alkyde, par rapport à son poids total,
b) ajuster le pH du mélange obtenu à l'étape a) à une valeur supérieure à 6, préférentiellement 7, très préférentiellement 8,
c) éventuellement précipiter le mélange obtenu après l'étape b) par ajustement du pH à une valeur inférieure à 6, préférentiellement 5, très préférentiellement 3.

Concrètement, les constituants (résine, eau, polymère associatif) sont introduits sous agitation dans un réacteur ; l'ordre d'introduction sera choisi par l'homme du métier, notamment en fonction de la solubilité dans l'eau de la résine à encapsuler.

La formulation est réalisée par mélange de ses différents constituants (eau, résine alkyde, polymère associatif) puis, selon une première variante, par ajustement du pH à une valeur supérieur à 6, préférentiellement 7, très préférentiellement 8.

Selon cette première variante, le procédé selon l'invention ne met pas en oeuvre l'étape c) d'acidification.

Dans une seconde variante, l'étape b) est suivie par une diminution du pH à une valeur inférieure à 6 ; il y a alors précipitation du milieu, ce qui provoque l'effondrement de la structure du polymère associatif sur elle-même. Il y a formation d'une dispersion dans l'eau de particules constituées des molécules de résine alkyde, piégées au sein de la structure du polymère associatif. Une telle dispersion est tout aussi favorable à une parfaite solubilisation de la résine alkyde dans l'eau. Le lien technique assurant l'unité de la présente invention repose sur la présence, dans les deux variantes, des 3 constituants fondamentaux que sont la résine alkyde, l'eau, et polymère associatif.

Aussi, dans cette seconde variante, le procédé selon l'invention est aussi caractérisé en ce qu'il met en oeuvre l'étape c).

Le procédé selon l'invention est aussi caractérisé en ce que le pH est ajusté dans l'étape b) au moyen d'une base minérale ou organique.

Le procédé selon l'invention est aussi caractérisé en ce que le pH est ajusté dans l'étape c) au moyen d'un acide moyennement fort ou fort.

Le procédé selon l'invention est aussi caractérisé en ce que le mélange de l'étape a) est constitué de 0,1 % à 20 %, préférentiellement de 0,1 % à 10 %, très préférentiellement de 0,1 % à 5 % en poids sec dudit polymère associatif, par rapport à son poids total.

Le procédé selon l'invention est aussi caractérisé en ce que le mélange de l'étape a) est constitué d'au moins 5 %, préférentiellement d'au moins 20 %, très préférentiellement d'au moins 30 %, de façon extrêmement préférentielle d'au moins 35 % en poids d'au moins une résine alkyde, et au plus de 70 % en poids d'au moins une résine alkyde, par rapport à son poids total.

Le procédé selon l'invention est aussi caractérisé en ce que, pour le polymère associatif, le monomère qui est un ester (méth)acrylique est choisi préférentiellement parmi l'acrylate d'éthyle, l'acrylate de butyle, le méthacrylate de méthyle et leurs mélanges.

Le procédé selon l'invention est aussi caractérisé en ce que, pour le polymère associatif, le monomère qui est un monomère hydrophobe associatif possède la formule générale (I): 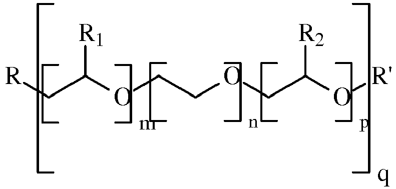 où :
- m, n, p et q sont des entiers et m, n, p sont inférieurs à 150, q est supérieur à 0 et au moins un entier parmi m, n et p est non nul,
- R comporte une fonction vinylique polymérisable,
- R₁ et R₂ sont identiques ou différents et représentent des atomes d'hydrogène ou des groupements alkyls,
- R' est un groupement hydrophobe comportant au moins 6 et au plus 36 atomes de carbone, préférentiellement au moins 16 et au plus 24 atomes de carbone, très préférentiellement au moins 18 et au plus 22 atomes de carbone.

Le procédé selon l'invention est aussi caractérisé en ce que la résine alkyde est choisie parmi les résines polyesters, polyuréthannes, polyuréthannes-polyesters et leurs mélanges.

Un autre objet de l'invention est constitué des formulations aqueuses obtenues par le procédé selon l'invention.

Ces formulations aqueuses sont caractérisées en ce qu'elles comprennent de l'eau, au moins une résine alkyde, et au moins un polymère associatif constitué :
- d'au moins un monomère qui est l'acide (méth)acrylique,
- d'au moins un monomère qui est un ester (méth)acrylique,
- et d'au moins un monomère hydrophobe associatif.

Ces formulations aqueuses, dans une première variante où elles sont obtenues par le procédé de l'invention sans mettre en oeuvre l'étape c) de précipitation, sont aussi caractérisées en ce que leur pH est supérieur à 6, préférentiellement 7, très préférentiellement 8.

Ces formulations aqueuses, dans une seconde variante où elles sont obtenues par le procédé de l'invention par mise en oeuvre l'étape c) de précipitation, sont aussi caractérisées en ce que leur pH est inférieur à 6, préférentiellement 5, très préférentiellement 3.

Ces formulations aqueuses sont aussi caractérisées en ce qu'elles contiennent aussi une base minérale ou organique.

Ces formulations aqueuses, dans une seconde variante où elles sont obtenues par le procédé de l'invention par mise en oeuvre l'étape c) de précipitation, sont aussi caractérisées en ce qu'elles contiennent un acide moyennement fort à fort.

Ces formulations aqueuses sont aussi caractérisées en ce qu'elles sont constituées de 0,1 % à 20 %, préférentiellement de 0,1 % à 10 %, très préférentiellement de 0,1 % à 5 % en poids sec dudit polymère associatif, par rapport à leur poids total.

Ces formulations aqueuses sont aussi caractérisées en ce qu'elles sont constituées d'au moins 5 %, préférentiellement d'au moins 20 %, très préférentiellement d'au moins 30 %, de façon extrêmement préférentielle d'au moins 35 % en poids d'au moins une résine alkyde, et au plus de 70 % en poids d'au moins une résine alkyde, par rapport à leur poids total.

Ces formulations aqueuses sont aussi caractérisées en ce que, pour le polymère associatif, le monomère qui est un ester (méth)acrylique est choisi préférentiellement parmi l'acrylate d'éthyle, l'acrylate de butyle, le méthacrylate de méthyle et leurs mélanges.

Ces formulations aqueuses sont aussi caractérisées en ce que, pour le polymère associatif, le monomère qui est un monomère hydrophobe associatif possède la formule générale (I) : 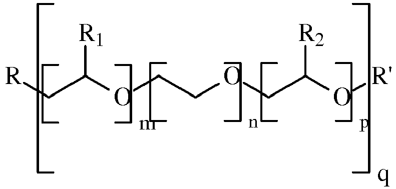 où :
- m, n, p et q sont des entiers et m, n, p sont inférieurs à 150, q est supérieur à 0 et au moins un entier parmi m, n et p est non nul,
- R comporte une fonction vinylique polymérisable,
- R₁ et R₂ sont identiques ou différents et représentent des atomes d'hydrogène ou des groupements alkyls,
- R' est un groupement hydrophobe comportant au moins 6 et au plus 36 atomes de carbone, préférentiellement au moins 16 et au plus 24 atomes de carbone, très préférentiellement au moins 18 et au plus 22 atomes de carbone
la formulation étant constituée d'au moins 20 % en poids d'une résine alkyde par rapport à son poids total.

Ces formulations aqueuses sont aussi caractérisées en ce que la résine alkyde est choisie parmi les résines polyesters, polyuréthannes, polyuréthannes-polyesters et leurs mélanges.

Un autre objet de l'invention est l'utilisation des formulations aqueuses précitées, pour la fabrication de peintures, de laques, de vernis ou de lasures. Concrètement, l'homme du métier réalise ces produits par mélange des différents additifs qui entrent classiquement dans la composition d'une peinture, d'une laque, d'un vernis ou d'une lasure, la résine alkyde étant introduite sous la forme des formulations aqueuses précitées.

Un dernier objet de l'invention réside dans les peintures, laques, vernis et lasures, caractérisés en ce qu'ils contiennent une formulation aqueuse de résine alkyde selon l'invention.

### EXEMPLES

Les exemples 1 et 2 illustrent respectivement la fabrication de monomères pouvant être mis en oeuvre selon l'invention, de même que la fabrication (à partir de ces monomères) de polymères associatifs hydrosolubles pouvant être mis en oeuvre selon l'invention.

### Exemple 1 : Synthèse de monomères mis en oeuvre selon l'invention

### Protocole a : Synthèse de monomère méthacrylique

Dans un réacteur de 1 litre, on pèse :
- 400 grammes de l'alcool béhénique condensé avec 25 moles d'oxyde d'éthylène fondu,
- 0,0994 gramme d'alloocimène,
- 43,75 grammes d'anhydride méthacrylique.

On chauffe le mélange à 82°C ± 2°C et on poursuit la cuisson pendant 3 heures à cette température. Le macromonomère obtenu est alors dilué avec 396 g d'acide méthacrylique afin d'obtenir une solution liquide à température ambiante.

### Protocole b : Synthèse de monomère uréthanne

Dans une première étape, on réalise un précondensat en pesant dans un erlen :
- 13,726 grammes de toluène di isocyanate,
- 36,1 grammes d'acrylate d'éthyle,
- 0,077 gramme d'alloocimène,
- 0,198 gramme de dilaurate de dibuthyle d'étain.

On pèse ensuite dans une ampoule de coulée 10,257 grammes de méthacrylate d'éthylène glycol et 10 grammes d'acrylate d'éthyle. On coule le contenu de cette ampoule dans l'erlen en 20 minutes à une température inférieure à 35°C, et on laisse réagir 30 minutes.

Dans une deuxième étape, on réalise la condensation en pesant 132 grammes de tri styryl phénol condensé avec 25 moles d'oxyde d'éthylène dans un réacteur de 1 000 ml que l'on maintiendra fondu à 65°C. On coule alors le précondensat en 20 minutes à 65°C sur cet alcool puis on cuit 2 heures à 65°C. Enfin, on dilue le mélange avec 15,5 grammes d'acrylate d'éthyle et 84,6 grammes d'eau bi permutée afin d'obtenir un liquide à température ambiante.

### Protocole c : Synthèse de monomère hémimaléate

Dans un réacteur de 1 litre on pèse :
- 400 grammes de l'alcool ramifié de 32 atomes de carbone condensé avec 25 moles d'oxyde d'éthylène fondu,
- 0,0994 gramme d'alloocimène,
- 25,3 grammes d'anhydride maléique.

On chauffe le mélange à 82°C ± 2°C et on poursuit la cuisson pendant 3 heures. Le macromonomère alors obtenu est dilué avec 425 g d'acide méthacrylique afin d'obtenir une solution liquide à température ambiante.

### Exemple 2 : Synthèse de polymères hydrosolubles associatifs

### Protocole A

Dans un réacteur de 1 litre, on pèse 280 grammes d'eau bi permutée et 3,89 grammes de dodecyl sulfate de sodium. On chauffe en pied de cuve à 82°C ± 2°C.

Pendant ce temps, on prépare une pré émulsion, en pesant dans un bécher :
- 112,4 grammes d'eau bi permutée,
- 2,1 grammes de dodecyl sulfate de sodium,
- 80,6 grammes d'acide méthacrylique,
- 146,1 grammes d'acrylate d'éthyle,
- 55,6 grammes d'une solution de macromonomère telle que décrite dans le protocole a).

On pèse ensuite 0,85 gramme de persulfate d'ammonium dilués dans 10 grammes d'eau bi permutée pour le premier catalyseur, et 0,085 gramme de métabisulfite de sodium dilués dans 10 grammes d'eau bi permutée pour le second catalyseur. Lorsque le pied de cuve est à température, on ajoute les 2 catalyseurs et on effectue la polymérisation pendant 2 heures à 76°C ± 2°C, avec ajout en parallèle de la pré émulsion. On rince la pompe avec 20 grammes d'eau bi permutée et on cuit 1 heure à 76°C ± 2°C. On refroidit enfin à température ambiante et on filtre le polymère ainsi obtenu.

### Protocole B

Dans un réacteur de 1 litre on pèse 280 grammes d'eau bi permutée et 3,89 grammes de dodecyl sulfate de sodium. On chauffe en pied de cuve à 82°C ± 2°C.

Pendant ce temps, on prépare une pré émulsion, en pesant dans un bécher :
- 334 grammes d'eau bi permutée,
- 3,89 grammes de dodecyl sulfate de sodium,
- 0,92 gramme de dodecyl mercaptan,
- 80,6 grammes d'acide méthacrylique,
- 160,55 grammes d'acrylate d'éthyle,
- 60,4 grammes de la solution de méthacryluréthanne décrite dans le protocole b).

On pèse ensuite 0,33 gramme de persulfate d'ammonium dilués dans 10 grammes d'eau bi permutée pour le premier catalyseur, et 0,28 gramme de métabisulfite de sodium dilués dans 10 grammes d'eau bi permutée pour le second catalyseur. Lorsque le pied de cuve est à température, on ajoute les 2 catalyseurs et on effectue la polymérisation pendant 2 heures à 84°C ± 2°C, avec ajout en parallèle de la pré émulsion. On rince la pompe avec 20 grammes d'eau bi permutée et on cuit 1 heure à 84°C ± 2°C. On refroidit enfin à température ambiante et on filtre.

### Protocole C

Ce protocole est identique au protocole B, à la différence près qu'on supprime ici le dodecyl mercaptan dans la première étape de pesée.

### Protocole D

Ce protocole est identique au protocole A, à la différence près qu'on introduit 0,9 gramme de dodecyl mercaptan dans l'étape de pesée initiale dans le bécher.

### Exemple 3

Cet exemple illustre le procédé selon l'invention de mise en dispersion d'une résine alkyde, où on a mis en oeuvre l'étape de précipitation du milieu. Il illustre aussi la formulation aqueuse ainsi obtenue et sa mise en oeuvre pour fabriquer une peinture, notamment en présence d'épaississants classiquement mis en oeuvre dans les peintures aqueuses standards.

### Essai n° 1-a

Cet essai illustre la fabrication d'une formulation aqueuse d'une résine alkyde en présence d'un polymère hydrophobe associatif.

On commence par peser 16,5 grammes d'un polymère associatif hydrophobe sous forme d'une dispersion aqueuse à 30 % de matières sèches ; le polymère est constitué de (exprimé en % en poids de chacun des monomères) :
a) 37,4 % d'acide méthacrylique,
b) 54,3 % d'acrylate d'éthyle,
c) 8,3 % d'un monomère de formule (I) avec :
   m = p = 0, n = 25, q = 1,
   R est la fonction méthacrylate,
   R₁ et R₂ sont identiques et représentent l'hydrogène,
   R' est un groupe alkyle ramifié constitué de 16 atomes de carbone (hexyl decylique).

On introduit alors dans 182 grammes d'eau 150 grammes d'une résine alkyde commercialisée par la société CRAY VALLEY™ sous la marque Synolac™ 6868 WD75, cette résine contenant des solvants. On introduit alors dans le mélange 16,5 grammes du polymère hydrophobe associatif tel que décrit plus haut.

On ajuste enfin le pH du mélange par de la soude à une valeur égale à 8,5.

On observe la formation d'un mélange crémeux puis le pH est abaissé jusqu'à 5,8 à l'aide d'une solution d'acide phosphorique à 4 %. On obtient une dispersion fluide de résine en milieu aqueux.

La taille de ces dispersions a été déterminée par diffusion dynamique de la lumière à l'aide d'un Zétasizer™ nano S90 commercialisé par la société MALVERN™ ; on obtient une valeur moyenne de 1 400 nm.

### Essai1-b

Cet essai illustre le procédé selon l'invention, à travers la fabrication d'une peinture alkyde en base aqueuse, fabrication qui met en oeuvre la formulation aqueuse obtenue pour l'essai 1-a.

Concrètement, on réalise ladite peinture par mélange de différents constituants dont les proportions sont données dans le tableau 1.

**Tableau 1**

| **Constituants** | **Masse (grammes)** |
|---|---|
| Eau ajoutée | 120 |
| Coadis™ BR85 | 8 |
| Acticide MBS | 2 |
| AMP 95 | 2 |
| Tego™ 1488 | 1 |
| TiO2 Kronos™ 2310 | 268 |
| Formulation aqueuse selon l'essai 1-a | 600 |
| Octa-soligen™ 144 Aqua | 10 |

Coadis™ BR85 est un agent dispersant commercialisé par la société COATEX™. Tego™ 1488 est un antimousse commercialisé par la société TEGO CHEMIE™. TiO2 Kronos™ 2310 désigne du dioxide de titane commercialisé par la société KRONOS™.
Octa-soligen™ 144 Aqua désigne un agent siccatif commercialisé par la société BORCHERS™.

Pour cette peinture, on a réalisé à 25°C, initialement puis après 24 heures, et selon les techniques bien connues de l'homme du métier, un certain nombre de mesures rhéologiques. On a notamment déterminé les viscosités ICI™, Stormer™, et Brookfield™ à 10 et 100 tours par minute. Les valeurs obtenues, reportées dans le tableau 2, correspondent à des valeurs typiques en matière de rhéologie pour une peinture facilement utilisable et applicable, c'est-à-dire présentant une bonne stabilité en pot, sans sédimentation, ni séparation de phases excessive, un bon chargement de l'outil d'application (rouleau, brosse), et une bonne qualité d'application (brosse, rouleau, pulvérisation). Le développement de viscosité entre t = 0 et t = 24 est typique de celui constaté pour la plupart des peintures en phase aqueuse.

**Tableau 2**

| **Viscosités** | **t = 0** | **t = 24 heures** |
|---|---|---|
| ICI™ | 0,8 | 0,9 |
| Stormer™ (KU) | 96 | 114 |
| Brookfield™ (mPa.s) (10 t/min / 100 t/min) | 21400/3230 | 33700/4810 |

### Essai 1-c

A 300 grammes de la peinture réalisée selon l'essai 1-b, on a ajouté 10 grammes d'un épaississant associatif commercialisé par la société COATEX™, et destiné aux peintures en phase aqueuse, qui est soit le Coapur™ XS 22, soit le Coapur™ 2025. Les mêmes mesures rhéologiques que pour l'essai 1-b ont été effectuées à l'instant t=0 et ont été reportées dans le tableau 3.

**Tableau 3**

| **Viscosités** | **Coapur™ XS 22** | **Coapur 2025** |
|---|---|---|
| ICI™ | 2,0 | 1,4 |
| Stormer™ (KU) | 141 | 116 |
| Brookfield™ (mPa.s) (10 t/min / 100 t/min) | 44 200 / 9 870 | 34 100 / 5 340 |

Les valeurs du tableau 3 démontrent que des épaississants normalement mis en oeuvre dans des peintures aqueuses standards, permettent d'épaissir efficacement la peinture alkyde en phase aqueuse selon l'invention. Ceci démontre a posteriori qu'on est bien parvenu à mettre en dispersion parfaitement la résine alkyde dans l'eau, ce qui a permis au final d'obtenir une peinture alkyde en phase aqueuse. La résine alkyde ainsi solubilisée dans l'eau possède en outre le même potentiel pour développer des interactions dites associatives avec les épaississants modifiés hydrophobiquement pour phase aqueuse, ce qui permet le contrôle des principales propriétés d'application de la peinture (garnissant, contrôle de la vitesse d'application, résistance à la projection, tendu). L'efficacité de ces interactions est notamment quantifiable par l'augmentation des viscosités Stormer et ICI.

### Exemple 4

### Essai n° 2-a

Cet essai illustre la fabrication d'une formulation aqueuse d'une résine alkyde exempte de solvant en présence d'un polymère hydrophobe associatif.

On commence par peser dans un réacteur de 1 L muni d'une agitation mécanique, d'un système de chauffage et d'un dispositif de distillation 16,5 grammes d'un polymère associatif hydrophobe sous forme d'une dispersion aqueuse à 30 % de matières sèches ; le polymère est constitué de (exprimé en % en poids de chacun des monomères) :
a) 37,4 % d'acide méthacrylique,
b) 54,3 % d'acrylate d'éthyle,
c) 8,3 % d'un monomère de formule (I) avec :
   m = p = 0, n = 25, q = 1,
   R est la fonction méthacrylate,
   R₁ et R₂ sont identiques et représentent l'hydrogène,
   R' est un groupe alkyle ramifié constitué de 16 atomes de carbone (hexyl decylique).

On introduit alors dans 182 grammes d'eau 150 grammes d'une résine alkyde commercialisée par la société CRAY VALLEY™ sous la marque Synolac™ 6868 WD75.

On introduit alors dans le mélange 16,5 grammes du polymère hydrophobe associatif tel que décrit plus haut. On distille alors à pression atmosphérique 48 ml d'eau et 40 ml de solvant organique jusqu'à ce que la température du mélange atteigne 100°C.

On ajuste enfin le pH du mélange par de la soude à une valeur égale à 8,5 et on laisse environ 15 minutes sous agitation.

On observe la formation d'un mélange crémeux puis le pH est abaissé jusqu'à 5,8 à l'aide d'une solution d'acide phosphorique à 4 %. On obtient une dispersion fluide de résine en milieu aqueux.

La taille de ces dispersions a été déterminée par diffusion dynamique de la lumière à l'aide d'un Zétasizer™ nano S90 commercialisé par la société MALVERN™ ; on obtient une valeur moyenne de 1200 nm.

### Essai2-b

Cet essai illustre le procédé selon l'invention, à travers la fabrication d'une peinture alkyde en base aqueuse, fabrication qui met en oeuvre la formulation aqueuse obtenue pour l'essai 2-a.

Concrètement, on réalise ladite peinture par mélange de différents constituants dont les proportions sont données dans le tableau 4.

**Tableau 4**

| **Constituants** | **Masse (grammes)** |
|---|---|
| Eau ajoutée | 120 |
| Coadis™ BR85 | 8 |
| Acticide MBS | 2 |
| AMP 95 | 2 |
| Tego™ 1488 | 1 |
| TiO2 Kronos™ 2310 | 268 |
| Formulation aqueuse selon l'essai 2-a | 600 |
| Octa-soligen™ 144 Aqua | 10 |

On a réalisé sur la peinture obtenue les mêmes mesures rhéologiques que celles décrites précédemment ; celles-ci ont été reportées dans le tableau 5.

**Tableau 5**

| **Viscosités** | **t = 0** |
|---|---|
| ICI™ | 1,2 |
| Stormer™ (KU) | 115 |
| Brookfield™ (mPa.s) (10 t/min / 100 t/min) | 22 800 / 6 180 |

On obtient des valeurs caractéristiques d'une peinture facilement utilisable et applicable, présentant une bonne stabilité en pot, sans sédimentation, ni séparation de phases excessive, un bon chargement de l'outil d'application (rouleau, brosse), et une bonne qualité d'application (brosse, rouleau, pulvérisation).

### Essai 2-c

A 337 grammes de la peinture réalisée selon l'essai 2-b, on a ajouté 9 grammes d'un épaississant associatif commercialisé par la société COATEX™, et destiné aux peintures en phase aqueuse, qui est soit le Coapur™ XS 22. Les mêmes mesures rhéologiques que pour l'essai 2-b ont été effectuées à l'instant t = 0 et reportées dans le tableau 6.

**Tableau 6**

| **Viscosités** | **Coapur™ XS 22** |
|---|---|
| ICI™ | 2,4 |
| Stormer™ (KU) | 140 |
| Brookfield™ (mPa.s) (10 t/min / 100 t/min) | 16700/7710 |

Les valeurs du tableau 6 démontrent que l'épaississant normalement mis en oeuvre dans des peintures aqueuses standards, permet d'épaissir efficacement la peinture alkyde en phase aqueuse selon l'invention. Ceci démontre a posteriori qu'on est bien parvenu à mettre parfaitement en dispersion la résine alkyde dans l'eau, ce qui a permis au final d'obtenir une peinture alkyde en phase aqueuse.

## Revendications

1. Procédé de mise en dispersion dans l'eau d'au moins une résine alkyde, **caractérisé en ce qu'**il comprend les étapes de :
a) mélanger au moins un polymère associatif constitué :
- d'au moins un monomère qui est l'acide (méth)acrylique,
- d'au moins un monomère qui est un ester (méth)acrylique,
- et d'au moins un monomère hydrophobe associatif
possédant la formule générale (I) : 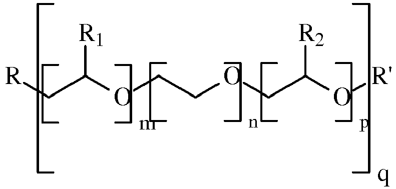 où :
- m, n, p et q sont des entiers et m, n, p sont inférieurs à 150, q est supérieur à 0 et au moins un entier parmi m, n et p est non nul,
- R comporte une fonction vinylique polymérisable,
- R₁ et R₂ sont identiques ou différents et représentent des atomes d'hydrogène ou des groupements alkyls,
- R' est un groupement hydrophobe comportant au moins 6 et au plus 36 atomes de carbone, préférentiellement au moins 16 et au plus 24 atomes de carbone, très préférentiellement au moins 18 et au plus 22 atomes de carbone,
avec au moins une résine alkyde et de l'eau,
le mélange étant constitué d'au moins 20 % en poids d'une résine alkyde, par rapport à son poids total,
b) ajuster le pH du mélange obtenu à l'étape a) à une valeur supérieure à 6, préférentiellement 7, très préférentiellement 8,
c) éventuellement précipiter le mélange obtenu après l'étape b) par ajustement du pH à une valeur inférieure à 6, préférentiellement 5, très préférentiellement 3.

2. Procédé selon la revendication 1, **caractérisé en ce qu'**il met en oeuvre l'étape c).

3. Procédé selon l'une des revendications 1 à 2, **caractérisé en ce que** le pH est ajusté dans l'étape b) au moyen d'une base minérale ou organique.

4. Procédé selon l'une des revendications 1 à 3, **caractérisé en ce que** le mélange de l'étape a) est constitué de 0,1 % à 20 %, préférentiellement de 0,1 % à 10 %, très préférentiellement de 0,1 % à 5 % en poids sec dudit polymère associatif, par rapport à son poids total.

5. Procédé selon l'une des revendications 1 à 4, **caractérisé en ce que** le mélange de l'étape a) est constitué d'au moins 5 %, préférentiellement d'au moins 20 %, très préférentiellement d'au moins 30 %, de façon extrêmement préférentielle d'au moins 35 % en poids d'au moins une résine alkyde, et au plus de 70 % en poids d'au moins une résine alkyde, par rapport à son poids total.

6. Procédé selon l'une des revendications 1 à 5, **caractérisé en ce que**, pour le polymère associatif, le monomère qui est un ester (méth)acrylique est choisi préférentiellement parmi l'acrylate d'éthyle, l'acrylate de butyle, le méthacrylate de méthyle et leurs mélanges.

7. Procédé selon l'une des revendications 1 à 6, **caractérisé en ce que** la résine alkyde est choisie parmi les résines polyesters, polyuréthannes, polyuréthannes-polyesters et leurs mélanges.

8. Formulations aqueuses susceptibles d'être obtenues par le procédé selon l'une des revendications 1 à 7, **caractérisées en ce qu'**elles comprennent de l'eau, au moins une résine alkyde, et au moins un polymère associatif constitué :
- d'au moins un monomère qui est l'acide (méth)acrylique,
- d'au moins un monomère qui est un ester (méth)acrylique,
- et d'au moins un monomère hydrophobe associatif 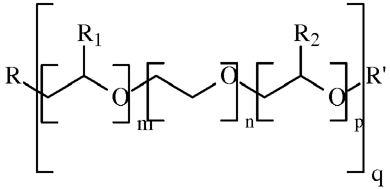 possédant la formule générale (I) :
où :
- m, n, p et q sont des entiers et m, n, p sont inférieurs à 150, q est supérieur à 0 et au moins un entier parmi m, n et p est non nul,
- R comporte une fonction vinylique polymérisable,
- R₁ et R₂ sont identiques ou différents et représentent des atomes d'hydrogène ou des groupements alkyls,
R' est un groupement hydrophobe comportant au moins 6 et au plus 36 atomes de carbone, préférentiellement au moins 16 et au plus 24 atomes de carbone, très préférentiellement au moins 18 et au plus 22 atomes de carbone,
la formulation étant constituée d'au moins 20 % en poids d'une résine alkyde, par rapport à son poids total.

9. Formulations aqueuses selon la revendication 8, **caractérisées en ce que** leur pH est supérieur à 6, préférentiellement 7, très préférentiellement 8.

10. Formulations aqueuses selon la revendication 8, **caractérisées en ce que** leur pH est inférieur à 6, préférentiellement 5, très préférentiellement 3.

11. Formulations aqueuses selon l'une des revendications 8 à 10, **caractérisées en ce qu'**elles contiennent aussi une base minérale ou organique.

12. Formulations aqueuses selon l'une des revendications 8 à 11, **caractérisées en ce qu'**elles sont constituées de 0,1 % à 20 %, préférentiellement de 0,1 % à 10 %, très préférentiellement de 0,1 % à 5 % en poids sec dudit polymère associatif, par rapport à leur poids total.

13. Formulations aqueuses selon l'une des revendications 8 à 12, **caractérisées en ce qu'**elles sont constituées d'au moins 5 %, préférentiellement d'au moins 20 %, très préférentiellement d'au moins 30 %, de façon extrêmement préférentielle d'au moins 35 % en poids d'au moins une résine alkyde, et au plus de 70 % en poids d'au moins une résine alkyde, par rapport à leur poids total.

14. Formulations aqueuses selon l'une des revendications 8 à 13, **caractérisées en ce que**, pour le polymère associatif, le monomère qui est un ester (méth)acrylique est choisi préférentiellement parmi l'acrylate d'éthyle, l'acrylate de butyle, le méthacrylate de méthyle et leurs mélanges.

15. Formulations aqueuses selon l'une des revendications 8 à 14, **caractérisées en ce que** la résine alkyde est choisie parmi les résines polyesters, polyuréthannes, polyuréthannes-polyesters et leurs mélanges.

16. Utilisation des formulations aqueuses selon l'une des revendications 8 à 15, pour la fabrication d'une peinture, d'une laque, d'un vernis ou d'une lasure.

## Patentansprüche

1. Verfahren zur Dispersion mindestens eines Alkydharzes in Wasser, **dadurch gekennzeichnet, dass** dieses die Schritte umfasst:
a) Mischen mindestens eines assoziativen Polymers, bestehend aus:
- mindestens einem Monomer, das (Meth)Acrylsäure ist,
- mindestens einem Monomer, das ein (Meth)Acrylester ist,
- und mindestens einem assoziativen hydrophoben Monomer der allgemeinen Formel (I): 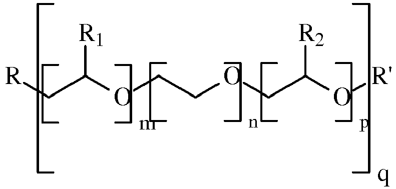
wobei:
- m, n, p und q ganze Zahlen sind, und m, n, p kleiner als 150 sind, q größer als 0 ist, und mindestens eine ganze Zahl von m, n und p nicht Null ist,
- R eine polymerisierbare Vinyl-Funktion umfasst,
- R₁ und R₂ identisch oder verschieden sind und Wasserstoffatome oder Alkylgruppen darstellen,
- R' eine hydrophobe Gruppe ist, die mindestens 6 und höchstens 36 Kohlenstoffatome, vorzugsweise mindestens 16 und höchstens 24 Kohlenstoffatome, stark bevorzugt mindestens 18 und höchstens 22 Kohlenstoffatome, umfasst,
mit mindestens einem Alkydharz und Wasser,
wobei die Mischung aus mindestens 20 Gew.-% eines Alkydharzes, bezogen auf ihr Gesamtgewicht, besteht,
b) Einstellen des pH der in Schritt a) erhaltenen Mischung auf einen Wert von mehr als 6, vorzugsweise 7, stark bevorzugt 8,
c) gegebenenfalls Ausfällen der nach Schritt b) erhaltenen Mischung durch Einstellen des pH auf einen Wert von weniger als 6, vorzugsweise 5, stark bevorzugt 3.

2. Verfahren nach Anspruch 1, **dadurch gekennzeichnet, dass** Schritt c) durchgeführt wird.

3. Verfahren nach einem der Ansprüche 1 bis 2, **dadurch gekennzeichnet, dass** der pH in Schritt b) mit einer mineralischen oder organischen Base eingestellt wird.

4. Verfahren nach einem der Ansprüche 1 bis 3, **dadurch gekennzeichnet, dass** die Mischung aus Schritt a) aus 0,1 Trockengew.-% bis 20 Trockengew.-%, vorzugsweise 0,1 Trockengew.-% bis 10 Trockengew.-%, stark bevorzugt 0,1 Trockengew.-% bis 5 Trockengew.-%, des assoziativen Polymers, bezogen auf ihr Gesamtgewicht, besteht.

5. Verfahren nach einem der Ansprüche 1 bis 4, **dadurch gekennzeichnet, dass** die Mischung aus Schritt a) aus mindestens 5 Gew.-%, vorzugsweise mindestens 20 Gew.-%, stark bevorzugt mindestens 30 Gew.-%, äußerst bevorzugt mindestens 35 Gew.-%, mindestens eines Alkydharzes und höchstens 70 Gew.-% mindestens eines Alkydharzes, bezogen auf ihr Gesamtgewicht, besteht.

6. Verfahren nach einem der Ansprüche 1 bis 5, **dadurch gekennzeichnet, dass**, für das assoziative Polymer, das Monomer, das ein (Meth)Acrylester ist, vorzugsweise aus Ethylacrylat, Butylacrylat, Methylmethacrylat und ihren Mischungen ausgewählt wird.

7. Verfahren nach einem der Ansprüche 1 bis 6, **dadurch gekennzeichnet, dass** das Alkydharz aus Polyester-, Polyurethan-, Polyurethan-Polyesterharzen und ihren Mischungen ausgewählt wird.

8. Wässerige Formulierungen, welche durch das Verfahren nach einem der Ansprüche 1 bis 7 erhalten werden können, **dadurch gekennzeichnet, dass** diese Wasser, mindestens ein Alkydharz und mindestens ein assoziatives Polymer umfassen, bestehend aus:
- mindestens einem Monomer, das (Meth)Acrylsäure ist,
- mindestens einem Monomer, das ein (Meth)Acrylester ist,
- und mindestens einem assoziativen hydrophoben Monomer
der allgemeinen Formel (I): 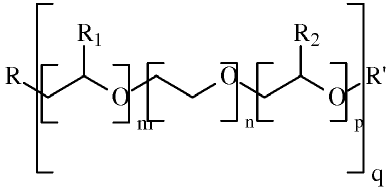 wobei:
- m, n, p und q ganze Zahlen sind, und m, n, p kleiner als 150 sind, q größer als 0 ist, und mindestens eine ganze Zahl von m, n und p nicht Null ist,
- R eine polymerisierbare Vinyl-Funktion umfasst,
- R₁ und R₂ identisch oder verschieden sind und Wasserstoffatome oder Alkylgruppen darstellen,
R' eine hydrophobe Gruppe ist, die mindestens 6 und höchstens 36 Kohlenstoffatome, vorzugsweise mindestens 16 und höchstens 24 Kohlenstoffatome, stark bevorzugt mindestens 18 und höchstens 22 Kohlenstoffatome, umfasst,
wobei die Formulierung aus mindestens 20 Gew.-% eines Alkydharzes, bezogen auf ihr Gesamtgewicht, besteht.

9. Wässerige Formulierungen nach Anspruch 8, **dadurch gekennzeichnet, dass** ihr pH größer als 6, vorzugsweise 7, stark bevorzugt 8, ist.

10. Wässerige Formulierungen nach Anspruch 8, **dadurch gekennzeichnet, dass** ihr pH kleiner als 6, vorzugsweise 5, stark bevorzugt 3, ist.

11. Wässerige Formulierungen nach einem der Ansprüche 8 bis 10,
**dadurch gekennzeichnet, dass** diese auch eine mineralische oder organische Base enthalten.

12. Wässerige Formulierungen nach einem der Ansprüche 8 bis 11, **dadurch gekennzeichnet, dass** diese aus 0,1 Trockengew.-bis 20 Trockengew.-%, vorzugsweise 0,1 Trockengew.-% bis 10 Trockengew.-%, stark bevorzugt 0,1 Trockengew.-% bis 5 Trockengew.-%, des assoziativen Polymers, bezogen auf ihr Gesamtgewicht, bestehen.

13. Wässerige Formulierungen nach einem der Ansprüche 8 bis 12, **dadurch gekennzeichnet, dass** diese aus mindestens 5 Gew.-%, vorzugsweise mindestens 20 Gew.-%, stark bevorzugt mindestens 30 Gew.-%, äußerst bevorzugt mindestens 35 Gew.-%, mindestens eines Alkydharzes und höchstens 70 Gew.-% mindestens eines Alkydharzes, bezogen auf ihr Gesamtgewicht, bestehen.

14. Wässerige Formulierungen nach einem der Ansprüche 8 bis 13, **dadurch gekennzeichnet, dass**, für das assoziative Polymer, das Monomer, das ein (Meth)Acrylester ist, vorzugsweise aus Ethylacrylat, Butylacrylat, Methylmethacrylat und ihren Mischungen ausgewählt ist.

15. Wässerige Formulierungen nach einem der Ansprüche 8 bis 14, **dadurch gekennzeichnet, dass** das Alkydharz aus Polyester-, Polyurethan-, Polyurethan-Polyesterharzen und ihren Mischungen ausgewählt ist.

16. Verwendung wässeriger Formulierungen nach einem der Ansprüche 8 bis 15, zur Herstellung einer Anstrichfarbe, eines Lacks, eines Firnis oder einer Lasur.

## Claims

1. Method for dispersion in water of at least one alkyd resin, **characterised in that** it comprises the steps of:
a) mixing at least one associative polymer consisting:
- of at least one monomer which is (meth)acrylic acid,
- of at least one monomer which is a (meth)acrylic ester,
- and of at least one associative hydrophobic monomer
having the general formula (I): 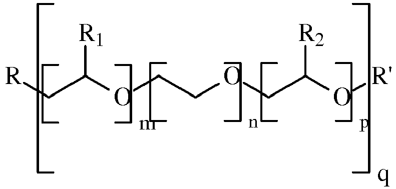 where:
- m, n, p and q are integers and m, n and p are less than 150, q is greater than 0 and at least one integer from among m, n and p is non-zero,
- R has at least one polymerisable vinylic function,
- R₁ and R₂ are identical or different and represent hydrogen atoms or alkyl groups,
- R' is a hydrophobic group comprising at least 6 and at most 36 carbon atoms, preferentially at least 16 and at most 24 carbon atoms, very preferentially at least 18 and at most 22 carbon atoms,
with at least one alkyd resin and water,
the mixture being constituted of at least 20% by weight of an alkyd resin, relative to its total weight,
b) adjusting the pH of the mixture obtained in step a) to a value greater than 6, preferentially 7, very preferentially 8,
c) eventually precipitating the mixture obtained after step b) through the adjustment of the pH to a value less than 6, preferentially 5, very preferentially 3.

2. Method according to claim 1, **characterised in that** it uses step c).

3. Method according to one of the claims 1 to 2, **characterised in that** the pH is adjusted in step b) by means of a mineral or organic base.

4. Method according to one of the claims 1 to 3, **characterised in that** the mixture of step a) consists of from 0.1% to 20%, preferentially from 0.1% to 10%, very preferentially from 0.1% to 5% by dry weight of said associative polymer, relative to its total weight.

5. Method according to one of the claims 1 to 4, **characterised in that** the mixture of step a) consists of at least 5%, preferentially of at least 20%, very preferentially of at least 30%, extremely preferentially of at least 35% by weight of at least one alkyd resin, and at most of 70% by weight of at least one alkyd resin, relative to its total weight.

6. Method according to one of the claims 1 to 5, **characterised in that**, with regard to the associative polymer, the monomer which is a (meth)acrylic ester is chosen preferentially from among ethyl acrylate, butyl acrylate, methyl methacrylate and mixtures thereof.

7. Method according to one of the claims 1 to 6, **characterised in that** the alkyd resin is chosen from among the polyester, polyurethane, polyurethane-polyester resins and mixtures thereof.

8. Aqueous formulations likely to be obtained by means of the method according to one of the claims 1 to 7, **characterised in that** they comprise water, at least one alkyd resin, and at least one associative polymer consisting:
- of at least one monomer which is (meth)acrylic acid,
- of at least one monomer which is a (meth)acrylic ester,
- and of at least one associative hydrophobic monomer
having the general formula (I): 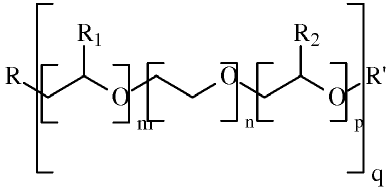 where:
- m, n, p and q are integers and m, n and p are less than 150, q is greater than 0 and at least one integer from among m, n and p is non-zero,
- R has at least one polymerisable vinylic function,
- R₁ and R₂ are identical or different and represent hydrogen atoms or alkyl groups,
R' is a hydrophobic group comprising at least 6 and at most 36 carbon atoms, preferentially at least 16 and at most 24 carbon atoms, very preferentially at least 18 and at most 22 carbon atoms,
the formulation being constituted of at least 20% by weight of an alkyd resin, relative to its total weight.

9. Aqueous formulations according to claim 8, **characterised in that** their pH is greater than 6, preferentially 7, very preferentially 8.

10. Aqueous formulations according to claim 8, **characterised in that** their pH is less than 6, preferentially 5, very preferentially 3.

11. Aqueous formulations according to one of the claims 8 to 10, **characterised in that** they also contain a mineral or organic base.

12. Aqueous formulations according to one of the claims 8 to 11, **characterised in that** they consist of from 0.1% to 20%, preferentially from 0.1% to 10%, very preferentially from 0.1% to 5%, by dry weight of said associative polymer, relative to their total weight.

13. Aqueous formulations according to one of the claims 8 to 12, **characterised in that** they consist of at least 5%, preferentially of at least 20%, very preferentially of at least 30%, extremely preferentially of at least 35% by weight of at least one alkyd resin, and at most of 70% by weight of at least one alkyd resin, relative to their total weight.

14. Aqueous formulations according to one of the claims 8 to 13, **characterised in that**, with regard to the associative polymer, the monomer which is a (meth)acrylic ester is chosen preferentially from among ethyl acrylate, butyl acrylate, methyl methacrylate and mixtures thereof.

15. Aqueous formulations according to one of the claims 8 to 14, **characterised in that** the alkyd resin is chosen from among the polyester, polyurethane, polyurethane-polyester resins and mixtures thereof.

16. Use of the aqueous formulations according to one of the claims 8 to 15, for the manufacture of a paint, a lacquer, a varnish or a woodstain.
